# EUROPEAN PATENT SPECIFICATION

(11) **EP 2 364 196 B1**
(45) Date of publication and mention of the grant of the patent: **20.03.2013**
(21) Application number: 09764981.8
(22) Date of filing: 07.12.2009
(51) Int. Cl.: B01D 39/16, B01D 46/54

(54) **FILTER MEDIA WITH NANOWEB LAYER**
FILTERMEDIUM MIT NANOVLIESSCHICHT
SUPPORT FILTRANT À COUCHE DE TOILE NANOMÉTRIQUE

(30) Priority: 05.12.2008 US 120080 P
(43) Date of publication of application: 14.09.2011
(73) Proprietor: E. I. du Pont de Nemours and Company, Wilmington, DE 19898 (US)
(72) Inventor: LIM, Hyun, Sung, Midlothian Virginia 23113 (US); CHI, Cheng-Hang, Midlothian Virginia 23113 (US)
(74) Representative: Dannenberger, Oliver Andre
(86) International application number: PCT/US2009/066936
(87) International publication number: WO 2010/065949

(56) References cited:
- EP-A1- 1 878 482
- WO-A1-2008/109117
- US-A1- 2008 274 312

## Description

### FIELD OF THE INVENTION

The present invention relates to filtration and more particularly to filtration media for filtering particulates from air or other gases comprising a nanoweb layer.

### BACKGROUND

The removal of particulates from a gas stream is an important industrial unit operation. Conventional means for filtering particulates and the like from gas streams include, but are not limited to, filter bags, filter tubes, filter panels and filter cartridges. Filters normally comprise a medium (or "media") through which the gas passes and that retains the particles to be filtered out of the gas stream.

Selection of the type of filtration media used is typically based on the fluid stream with which the filter element comes in contact, the operating conditions of the system and the type of particulates being filtered. Filter media may be broadly characterized as either depth filtration media or surface filtration media. Particles tend to penetrate somewhat and accumulate within depth filtration media. In contrast, the majority of particles collect on the surface of surface filtration media.

Many materials are known to be useful as depth filtration media, including spun bond or melt blown webs, felts and fabrics made from a variety of materials, including polyesters, polypropylenes, aramids, cellulose, glasses and fluoropolymers. Known melt blown filter media demonstrate high efficiency and low pressure drop.

Providing a static electric charge to depth filtration media such as melt blown media improves its filtration efficiency. Electrostatic filter materials, or electrets, have electrostatically enhanced fibers which enhance filter performance by attracting particles to the fibers, and retaining them. Electrostatic filters rely on charged particles to dramatically increase collection efficiency for a given pressure drop across a filter. Pressure drop in an electrostatic filter also generally increases at a slower rate than it does in a mechanical filter of similar efficiency.

Electrostatic media may lose efficiency during use, particularly when used in an environment in which the filter element is exposed to moisture or oily particles. Many of the particles and contaminants with which electrostatic filters come into contact interfere with their filtering capabilities. Liquid aerosols, for example, particularly oily aerosols, tend to cause electret filters to lose their electrostatically-enhanced filtering efficiency.

To reduce these effects, the amount of the non-woven polymeric web in the electret filter may be increased by adding layers of web or increasing the thickness of the electret filter web. The additional web, however, increases the pressure drop across the electret filter and adds weight and bulk.

Surface filters, such as membranes, have gained popularity in certain applications, particularly outdoor environments or those in which the fluid to be filtered contains liquid aerosols or harsh chemicals. In other applications, membrane filter media is useful because it has a more constant filtration efficiency than that of depth filtration media. Membranes have stable filtration efficiency because, unlike depth filtration media, a membrane filter's efficiency is not dependent upon the buildup of a cake of dust particles.

Polytetrafluoroethylene (PTFE) has demonstrated utility in many areas such as harsh chemical environments, which normally degrade many conventional metals and polymeric materials. A significant development in the area of particle filtration was achieved when expanded PTFE (ePTFE) membrane filtration media were incorporated as surface laminates on conventional filter elements. Examples of such filtration media are taught in U.S. Pat. No. 4,878,930, and U.S. Pat. No. 5,207,812, which are directed to filter cartridges for removing particles of dust from a stream of moving gas or air. A further composite filter media comprising a nanoweb acting as depth filter upstream of a membrane is disclosed in WO2008/109117. Membranes constructed of ePTFE are advantageously water tight. However, membranes may exhibit relatively high pressure drop when compared to depth filtration media and have relatively low dust capacity. Accordingly, in some applications, filter elements using membranes will need frequent replacement or cleaning.

There is a need therefore for a filter media that has superior lifetime before cleaning or replacement, and lower pressure drop than media with comparable filtration efficiencies.

### SUMMARY OF THE INVENTION

The present invention is a filter media for filtering particulates from air or other gases comprising a membrane, and a depth filtration layer upstream and in fluid contact with the membrane. The depth filtration layer comprises a nanoweb layer and a prefiltration layer upstream of and in fluid communication with the nanoweb layer.

In one embodiment of the invention, the nanoweb has a basis weight of at least about 2 gsm. The prefiltration layer comprises a charged nonwoven. The charged nonwoven may further comprise a melt blown web. The charged melt blown web may further have a basis weight of at least about 30 gsm.

### DETAILED DESCRIPTION OF THE PREFERRED EMBODIMENTS

The term "nanofiber" as used herein refers to fibers having a number average diameter or cross-section less than about 1000 nm, even less than about 800 nm, even between about 50 nm and 500 nm, and even between about 100 and 400 nm. The term diameter as used herein includes the greatest cross-section of non-round shapes.

The term "nonwoven" means a web including a multitude of randomly distributed fibers. The fibers generally can be bonded to each other or can be unbonded. The fibers can be staple fibers or continuous fibers. The fibers can comprise a single material or a multitude of materials, either as a combination of different fibers or as a combination of similar fibers each comprised of different materials. A "nanoweb" is a nonwoven web that comprises nanofibers. The term "nanoweb" as used herein is synonymous with the term "nanofiber web."

The term "in fluid contact with" with regard to two components of a system, one component being upstream of the other, then during the normal operation of the system, essentially all of the fluid passing through the system passes first through the upstream component and then through the other component. The terms "fluid contact" and "fluid communication" as used herein are synonymous.

The term "adjacent" in reference to the relative positions of two items such as two webs or a web and a membrane means that the items are in fluid contact with each other and are mounted in the same filter body. They may be in contact with each other, bonded to each other, or there may be a gap between them that during normal operation of the filter system would be filled with liquid or gas.

The composite filter media includes at least one depth filtration media layer in fluid communication with a membrane layer. The depth filtration media layer comprises a prefiltration layer in fluid communication with a nanoweb layer. The prefiltration layer comprises a nonwoven such as, for example and without meaning to be limiting, a melt blown or spun bond web consisting of polypropylene or polyethylene, non-woven polyester or polyamide fabric, fiberg!ass, microfiberglass, cellulose, and polytetrafluoroethylene. Preferably, the composite filter includes at least one melt blown polymer fiber web. The depth filtration media is in fluid contact with a nanoweb, which is in tum in contact with a filtration membrane.

Melt blown webs are produced by entraining melt spun fibers with convergent streams of heated air to produce extremely fine filaments. Melt blown processing forms continuous sub-denier fibers, with relatively small diameter fibers that are typically less than 10 microns.

The melt blown polymer fiber web layer(s) can be made from a variety of polymeric materials, including polypropylene, polyester, polyamide, polyvinyl chloride, polymethylmethacrylate, and polyethylene. Polypropylene is among the more preferred polymeric materials. Typically, the polymer fibers that form the web have a diameter in the range of about 0.5 micron to about 10 microns. Preferably, the fiber diameter is about 1 micron to about 5 microns.

The thickness of the depth filtration layers is not critical. If the depth filtration media is a melt blown web, for example, the thickness may be from about 0.25 mm to about 3 mm. Greater thickness results in higher dust capacity; however, excessively thick depth filtration media layers may limit the total number of layers that can be used in the composite filter media.

The selection of the basis weight of the depth filtration media is also within the capability of those of skill in the art. The weight of a melt blown polymer fiber web may, for example, be in the range of about 1 g/m² to about 100 g/m², preferably the basis weight of the melt blown fiber web is about 10 g/m² to about 50 g/m².

In one aspect, the depth filtration media includes at least one electret filter media layer comprising a highly efficient layer having an electrostatic charge. Electric charge can be imparted to melt blown fibrous webs to improve their filtration performance using a variety of known techniques.

For example, a suitable web is conveniently cold charged by sequentially subjecting the web to a series of electric fields, such that adjacent electric fields have substantially opposite polarities with respect to each other, in the manner taught in U.S. Pat. No. 5,401,446, to Tsai et al. As described therein, one side of the web is initially subjected to a positive charge while the other side of the web is initially subjected to a negative charge. Then the first side of the web is subjected to a negative charge and the other side of the web is subjected to a positive charge. However, electret filter materials may also be made by a variety of other known techniques.

The depth filtration media may also contain additives to enhance filtration performance and may also have low levels of extractable hydrocarbons to improve performance. The fibers may contain certain melt processable fluorocarbons, for example, fluorochemical oxazolidinones and piperazines and compounds or oligomers that contain perfluorinated moieties. The use of such additives can be particularly beneficial to the performance of an electrically charged web filter.

The depth filtration layer also comprises a nanoweb. The as-spun nanoweb comprises primarily or exclusively nanofibers, advantageously produced by electrospinning, such as classical electrospinning or electroblowing, and also, by meltblowing or other such suitable processes. Classical electrospinning is a technique illustrated in U.S. Patent No. 4,127,706, wherein a high voltage is applied to a polymer in solution to create nanofibers and nonwoven mats. However, total throughput in electrospinning processes is too low to be commercially viable in forming heavier basis weight webs.

The "electroblowing" process is disclosed in World Patent Publication No. WO 03/080905.

A stream of polymeric solution comprising a polymer and a solvent is fed from a storage tank to a series of spinning nozzles within a spinneret, to which a high voltage is applied and through which the polymeric solution is discharged. Meanwhile, compressed air that is optionally heated is issued from air nozzles disposed in the sides of, or at the periphery of the spinning nozzle. The air is directed generally downward as a blowing gas stream which envelopes and forwards the newly issued polymeric solution and aids in the formation of the fibrous web, which is collected on a grounded porous collection belt above a vacuum chamber. The electroblowing process permits formation of commercial sizes and quantities of nanowebs at basis weights in excess of about 1 gsm, even as high as about 40 gsm or greater, in a relatively short time period.

A substrate or scrim can be arranged on the collector to collect and combine the nanofiber web spun on the substrate, so that the combined fiber web is used as a high-performance filter, wiper and so on. Examples of the substrate may include various nonwoven cloths, such as meltblown nonwoven cloth, needle-punched or spunlaced nonwoven cloth, woven cloth, knitted cloth, paper, and the like, and can be used without limitations so long as a nanofiber layer can be added on the substrate. The nonwoven cloth can comprise spunbond fibers, dry-laid or wet-laid fibers, cellulose fibers, melt blown fibers, glass fibers, or blends thereof.

Polymer materials that can be used in forming the nanowebs of the invention are not particularly limited and include both addition polymer and condensation polymer materials such as, polyacetal, polyamide, polyester, polyolefins, cellulose ether and ester, polyalkylene sulfide, polyarylene oxide, polysulfone, modified polysulfone polymers, and mixtures thereof. Preferred materials that fall within these generic classes include, poly(vinylchloride), polymethylmethacrylate (and other acrylic resins), polystyrene, and copolymers thereof (including ABA type block copolymers), poly(vinylidene fluoride), poly(vinylidene chloride), polyvinylalcohol in various degrees of hydrolysis (87% to 99.5%) in crosslinked and non-crosslinked forms. Preferred addition polymers tend to be glassy (a T_{g} greater than room temperature). This is the case for polyvinylchloride and polymethylmethacrylate, polystyrene polymer compositions or alloys or low in crystallinity for polyvinylidene fluoride and polyvinylalcohol materials. One preferred class of polyamide condensation polymers are nylon materials, such as nylon-6, nylon-6,6, nylon 6,6-6,10, and the like. When the polymer nanowebs of the invention are formed by meltblowing, any thermoplastic polymer capable of being meltblown into nanofibers can be used, including polyolefins, such as polyethylene, polypropylene and polybutylene, polyesters such as poly(ethylene terephthalate) and polyamides, such as the nylon polymers listed above.

It can be advantageous to add known-in-the-art plasticizers to the various polymers described above, in order to reduce the T_{g} of the fiber polymer. Suitable plasticizers will depend upon the polymer to be electrospun or electroblown, as well as upon the particular end use into which the nanoweb will be introduced. For example, nylon polymers can be plasticized with water or even residual solvent remaining from the electrospinning or electroblowing process. Other known-in-the-art plasticizers which can be useful in lowering polymer T_{g} include, but are not limited to aliphatic glycols, aromatic sulphanomides, phthalate esters, including but not limited to those selected from the group consisting of dibutyl phthalate, dihexl phthalate, dicyclohexyl phthalate, dioctyl phthalate, diisodecyl phthalate, diundecyl phthalate, didodecanyl phthalate, and diphenyl phthalate, and the like. The Handbook of Plasticizers, edited by George Wypych, 2004 Chemtec Publishing, discloses other polymer/plasticizer combinations which can be used in the present invention.

The average fiber diameter of the nanofibers deposited by the electroblowing process and suitable for use in the invention is less than about 1000 nm, or even less than about 800 nm, or even between about 50 nm to about 500 nm, and even between about 100 nm to about 400 nm. Each nanofiber layer preferably has a basis weight of at least about 1 g/m², and more preferably at least about 2 g/m². Each nanofiber layer may also have a basis weight of between about 6 g/m² to about 100 g/m², and even between about 6 g/m² to about 60 g/m², and a thickness between about 20 µm to about 500 µm, and even between about 20 µm to about 300 µm.

Downstream of the depth filtration layer is a microporous polymeric membrane filtration layer. The microporous polymeric membrane is intended to capture particles that pass through the removable depth filtration layers. Microporous polymeric membranes have demonstrated dependability and reliability in removing particles and organisms from fluid streams. Membranes are usually characterized by their polymeric composition, air permeability, water intrusion pressure and filtration efficiencies.

A variety of microporous polymeric membranes can be used as the membrane filtration layer, depending on the requirements of the application. The membrane filter layer may be constructed from the following exemplary materials: nitrocellulose, triacetyl cellulose, polyamide, polycarbonate, polyethylene, polypropylene, polytetrafluoroethylene, polysulfone, polyvinyl chloride, polyvinylidene fluoride, acrylate copolymer.

The membrane filtration layer is preferably constructed from a hydrophobic material that is capable of preventing the passage of liquids. The membrane filtration layer must be able to withstand the applied differential pressure across the filter media without any liquid passing through it. The preferred membrane has a water intrusion pressure of 0.2 bar to 1.5 bar and an average air permeability of about 7 Frazier to about 100 Frazier, and more preferably, an average air permeability of about 10 Frazier to about 40 Frazier.

Preferably, the membrane filtration layer is a microporous flouropolymer, such as ePTFE, flourinated ethylenepropylene (FEP), perfluoronalkoxy polymer (PFA), polypropylene (PU), polyethelene (PE) or ultra high molecular weight polyethelyne (uhmwPE).

Most preferably, the membrane filtration layer comprises ePTFE. Suitable ePTFE membranes are described in U.S. Patent No. 5,814,405. The membranes described therein have good filtration efficiency, high air flow and burst strength. Methods of making suitable ePTFE membranes are fully described therein and are incorporated herein by reference. These ePTFE membranes are available from W. L. Gore and Associates, Inc. of Newark, Del. or Donaldson Corporation of Minneapolis, MN. However, ePTFE membranes constructed by other means can also be used.

The membrane filtration layer may optionally contain a filler material to improve certain properties of the filter. Suitable fillers, such as carbon black, or other conductive filler, catalytic particulate, fumed silica, colloidal silica or adsorbent materials, such as activated carbon or ceramic fillers, such as activated alumina and TiO₂, and methods preparing filled membranes useful in the present invention are fully described in U.S. Pat. No. 5,814,405.

A support layer may be provided to maintain the filtration layers in the proper orientation to fluid flow. Preferred supporting material must be rigid enough to support the membrane and removable layers, but soft and supple enough to avoid damaging the membrane. The support layer may comprise non-woven or woven fabrics. Other examples of suitable support layer materials may include, but are not limited to, woven and non-woven polyester, polypropylene, polyethylene, fiberglass, microfiberglass, and polytetrafluoroethylene. In a pleated orientation, the material should provide airflow channels in the pleats while holding the pleats apart (i.e., preventing the pleats from collapsing). Materials such as a spunbonded non-wovens are particularly suitable for use in this application.

The support layer may be positioned upstream or downstream of the membrane filtration layer. Optionally, a support material may be laminated to the membrane filtration layer to form a base layer. In this aspect, the base layer advantageously provides both support to the overlaying melt blown media layers and acts as the final filtration surface.

In one embodiment, the filtration system can comprise a nanofiber web with one or more nanofiber layers in fluid contact with a microporous membrane. In further embodiments, the nanoweb may have a thickness of less than about 300 µm or even less than about 150 µm as determined by ISO 534 under an applied load of 50 kPa and an anvil surface area of 200 m².

The nanoweb and the membrane may be adjacent to each other and may be optionally bonded to each other over part or all of their surface. The combination of nanoweb and membrane may be made by adhesively laminating the nanofiber web to the membrane or by forming the nanofiber layer directly on the membrane by placing the membrane on the collection belt in the above described process to form a membrane/nanofiber layer structure, in which case the nanofiber layer can be adhered to the membrane by mechanical entanglement. Examples of the membrane may include various microporous films such as stretched, filled polymers and expanded polytetrafluoroethylene (ePTFE) and can be used without limitation so long as the membrane has the required filtration performance.

In an embodiment of the invention, the nanofiber web and membrane are in fluid contact with other but not necessarily in physical contact with each other. They may be held in place with a gap between them, or they may be held in different filter bodies and connected by a fluid conveying channel or tube.

The membrane may comprise, for example, a polymer selected from the group consisting of expanded polytetrafluoroethylene, polysulfone, polyethersulfone, polyvinylidene fluoride, polycarbonate, polyamide, polyacrylonitrile, polyethylene, polypropylene, polyester, cellulose acetate, cellulose nitrate, mixed cellulose ester, and blends and combinations thereof.

An ePTFE membrane suitable for the invention can be prepared by a number of different known processes, but is preferably prepared by expanding polytetrafluoroethylene as described in U.S. Pat. Nos. 4,187,390; 4,110,239; and 3,953,566 to obtain ePTFE.

By "porous" is meant that the membrane has an air permeability of at least 0.05 cubic meters per minute per square meter (m/min) at 20 mm water gauge. Membranes with air permeabilities of 200 m/min at 20 mm water or more can be used. The pores are micropores formed between the nodes and fibrils of the ePTFE.

Similarly a membrane can be used that is described in any of U.S. Pat. Nos. 5,234,751, 5,217,666, 5,098,625, 5,225,131, 5,167,890, 4,104,394, 5,234,739, 4,596,837, JPA 1078823 and JPA 3-221541 in which extruded or shaped PTFE which is unexpanded is heated to sinter or semi-sinter the article. This sintered or semi-sintered article is then stretched to form a desired porosity and desired properties.

For special applications, PTFE can be provided with a filler material in order to modify the properties of PTFE for special applications. For example, it is known from U.S. Pat. No. 4,949,284 that a ceramic filter (SiO₂) and a limited amount of microglass fibers can be incorporated in a PTFE material; and in EP-B-0-463106, titanium dioxide, glass fibers, carbon black, activated carbon and the like are mentioned as filler.

Techniques for the preparation of microporous films from highly filled polymers, usually polyolefins, are known. Such webs are also suitable for use as the membrane of the invention. Typically a combination of a polyolefin, usually a polyethylene, is compounded with a filler, usually CaCO₃, and extruded and stretched into a film to form a microporous film.

Suitable examples of microporous films for use as the filtration membrane of the present invention include those described in U.S. Pat. Nos. 4,472,328, 4,350,655 and 4,777,073_{.}

The microporous membrane and nanoweb can be left in an unbonded state, or even held in different filter bodies. The microporous membrane and nanoweb can also be optionally bonded to each other, such as by adhesive bonding, thermal bonding, and ultrasonic bonding, although any means for bonding known to one skilled in the art may be employed. In a preferred embodiment, the membrane is bonded to the nanoweb, for example, using a suitable lamination technique, such as passing the materials through a hot roll nip at a temperature sufficient to melt adhesive that has been applied to the membrane or nanoweb. One of the rolls can have a raised pattern on its surface in order to produce a bonding pattern in the laminate.

One or more adhesives may optionally be used to bond the nanoweb and microporous membrane or the laminate to the inner or outer fabrics. One suitable adhesive is a thermoplastic adhesive, which can be softened upon heating, then hardened upon cooling over a number of heating and cooling cycles. An example of such a thermoplastic adhesive would be a "hot melt" adhesive.

The adhesive used to laminate the porous ePTFE membrane to the fabric can also be one of a variety of fluorochemical dispersions or synthetic latexes, including aqueous anionic dispersions of butadiene acrylonitrile copolymers, copolymers based on acrylic esters, vinyl and vinylidene chloride polymers and copolymers produced by emulsion polymerization, styrene-butadiene copolymers, and terpolymers of butadiene, styrene, and vinyl pyridine.

Different methods of coating the nanoweb or membrane with adhesive before lamination can be used. For example the nanoweb can be first coated in the required areas with adhesive and then the ePTFE membrane is placed onto the adhesive side of the coated fabric. Conductive heat and ample pressure are applied to the membrane side to cause the adhesive to flow into the membrane pores. If the adhesive is cross-linkable, the adhesive cross-links due to the heat and results in a mechanical attachment of the membrane to the substrate.

As a further example of an article formed from a laminate of a fluoropolymer and a non fluorinated polymer and a process of lamination, U. S. Pat No. 5,855,977 discloses a multi-layer article comprising a substantially non-fluorinated layer and a fluorinated layer of fluoropolymer comprising interpolymerized monomeric units. The multi-layer article further comprises an aliphatic di-, or polyamine, the aliphatic di-, or polyamine providing increased adhesion between the layers as compared to a multi-layer article not containing the aliphatic di-, or polyamine.

A variety of further methods can be used to increase the adhesion between a fluorinated polymer layer and a polyamide. An adhesive layer can, for example, be added between the two polymer layers. U.S. Pat. No. 5,047,287 discloses a diaphragm, suitable for use in automotive applications, which comprises a base fabric having a fluororubber layer bonded to at least one surface by an adhesive that includes an acrylonitrile-butadiene or acrylonitrile-isoprene rubber having an amino group.

Surface treatment of one or both of the layers also sometimes is employed to aid bonding. Some, for example, have taught treating fluoropolymer layers with charged gaseous atmosphere (e.g., corona treatment) and subsequently applying a layer of a second material, for example a thermoplastic polyamide. E.g., European Patent Applications 0185590 (Ueno et al.) and 0551094 (Krause et al.) and U.S. Pat. Nos. 4,933,060 (Prohaska et al.) and 5,170,011 (Martucci).

Blends of the fluoropolymer and the dissimilar layer themselves are in some cases employed as an intermediate layer to help bond the two layers together. European Patent Application 0523644 (Kawashima et al.) discloses a plastic laminate having a polyamide resin surface layer and a fluororesin surface layer.

In a further example of a method of bonding a non fluoropolymer layer to a fluoropolymer layer, U.S. Patent No. 6,869,682 describes an article comprising: a) a first layer comprising fluoropolymer; and b) a second layer bonded to the first layer, the second layer comprising a mixture of a melt processable substantially non-fluorinated polymer, a base, and a crown ether.

In a still further example of a method of bonding a non fluoropolymer layer to a fluoropolymer layer U.S. Patent No. 6,962,754 describes a structure comprising a fluoropolymer layer and directly attached to one of its sides a tie layer comprising a tie resin comprising a polyamide which results from the condensation of monomers comprising essentially at least one di-acid and at least one diamine of a specific composition.

The heat and pressure of the method by which the layers are brought together (e.g., coextrusion or lamination) may be sufficient to provide adequate adhesion between the layers. However, it may be desirable to further treat the resulting multi-layer article, for example with additional heat, pressure, or both, to provide further adhesive bond strength between the layers. One way of supplying additional heat when the multi-layer article prepared by extrusion is by delaying the cooling of the laminate after co-extrusion. Alternatively, additional heat energy may be added to the multi-layer article by laminating or coextruding the layers at a temperature higher than necessary for merely processing the several components. Or, as another alternative, the finished laminate may be held at an elevated temperature for an extended period of time. For example the finished multi-layer article may be placed in a separate means for elevating the temperature of the article, such as an oven or heated liquid bath. A combination of these methods may also be used.

The filter of the invention may comprise a scrim layer in which the scrim is located adjacent to only the nanoweb, or only the membrane, or in between both. A "scrim", as used here, is a support layer and can be any planar structure with which the nanoweb can be bonded, adhered or laminated. Advantageously, the scrim layers useful in the present invention are spunbond nonwoven layers, but can be made from carded webs of nonwoven fibers and the like. Scrim layers useful for some filter applications require sufficient stiffness to hold pleats and dead folds.

### Examples

### Materials

Nanoweb was prepared using the electroblowing process described above as disclosed in World Patent Publication No. WO 03/080905 from Nylon 6,6, (Zytel xx, Du Pont, Wilmington, DE) in formic acid. Charged melt blown of either 32 gsm or 36 gsm basis weight was obtained from DelStar Technologies located Middletown DE. The uncharged melt blown was made without charging. PTFE membrane used to run the test was a typical PTFE membrane rated as 3 micron filter and its bubble point and mean flow pore were measured at 5.6 and 2.2 micron respectively.

### Testing

Fine particle dust-loading tests were conducted on flat-sheet media using automated filter test (TSI Model No. 8130) with a circular opening of 11.3 cm diameter (area = 100 cm²). A 2 wt% sodium chloride aqueous solution was used to generate fine aerosol with a mass mean diameter of 0.26 micron, which was used in the loading test. The air flow rate was 40 liter/min which corresponded to a face velocity of 6.67 cm/s. According to equipment manufacturer, the aerosol concentration was about 16 mg/m³. Filtration efficiency and initial pressure drop are measured at the beginning of the test and the final pressure drop is measured at the end of the test. Pressure drop increase is calculated by subtracting the initial pressure drop from the final pressure drop.

A comparative example 1 used the same fine aerosol loading procedure that the media was made of scrim and PTFE membrane. Although the fine aerosol was challenged to the scrim side, but the aerosol loaded on the PTFE membrane quickly and pressure drop increase 128.1 mm of water after 15.7 minutes.. The scrim did not provide any prefiltration of fine aerosol. A media with charged melt blown layer on the scrim and PTFE membrane was prepared. A loading test was carried out following the same procedure described below.

Table 1 shows a comparison of pressure increase over approximately 31 minutes of filtration for samples with no nanoweb and with nanoweb of four different basis weights. The samples numbered 4A-4D therefore consist of a PTFE membrane plus scrim, a nanoweb in fluid contact with the PTFE through the scrim, and a charged melt blown material on the nanoweb. Sample 2A has no nanofiber web, but has only charged melt blown web.. Although the initial resistance is a little higher in the presence of nanoweb, the increase over 31 minutes is significantly lower and demonstrates the effectiveness of the invention at keeping pressure down during filtration.

**TABLE 1**

| Samples with 36 gsm Charged MB Pressure Increase over 31 Minutes. | | | |
|---|---|---|---|
| Sample | Nanoweb Basis Weight (g/m²) | Initial Resistance (mm Water) | Resistance Increase (mm Water) |
| 2A | None | 26.1 | 75.6 |
| 4A | 2.1 | 34.8 | 54.8 |
| 4B | 3.5 | 29.2 | 34.4 |
| 4C | 4.8 | 31.6 | 30.5 |
| 4D | 6.8 | 34.2 | 27.0 |

Table 2 shows a similar comparison with the 32 gsm melt blown material. Sample 2B has a charged melt blown layer, and sample 3 has an uncharged melt blown layer. The same improvement in dust holding capacity is evident in the presence of charged melt blown web and its importance of the charge on the melt blown is also shown. If the charge on the melt blown dissipates, the dust holding capacity of the filter is significantly reduced. Further improvement is dust loading capacity is evident in the presence of nanofiber web with example 4F.

**TABLE 2**

| Samples with 32 gsm Melt Blown | | | |
|---|---|---|---|
| Sample | Nanoweb Basis Weight (g/m²) | Initial Resistance (mm Water) | Resistance Increase (mm Water) |
| 2B | None | 28.1 | 61.2 |
| 3 | None | 32.4 | 121.9 |
| 4F | 2.1 | 28.7 | 37.2 |

Table 3 shows the effectiveness of the combination of charged melt blown and nanoweb together in a filter medium. In table 3, samples 5A - 5D have no charged melt blown. The capacity of the filter medium is not improved significantly by increasing the nanoweb basis weight. However the charged melt blown media the capacity is increased significantly when the nanoweb basis weight is increased.

**TABLE 3**

| Comparison of Nanoweb Performance with and without Melt Blown | | | | |
|---|---|---|---|---|
| Sample | Melt Blown Basis Weight (g/m²) | Nanoweb Basis Weight (g/m²) | Initial Resistance (mm Water) | Resistance Increase (mm Water) |
| 5A | 0 | 2.1 | 29.3 | 108.4 |
| 5B | 0 | 3.5 | 29.6 | 110.8 |
| 5C | 0 | 4.8 | 36.5 | 117.5 |
| 5D | 0 | 6.8 | 36.2 | 116.9 |
| 4A | 36 | 2.1 | 34.8 | 54.8 |
| 4B | 36 | 3.5 | 29.2 | 34.4 |
| 4C | 36 | 4.8 | 31.6 | 30.5 |
| 4D | 36 | 6.8 | 34.2 | 27.0 |

## Claims

1. A filter media for filtering particulates from air or other gases comprising a membrane, and a depth filtration layer upstream and in fluid contact with the membrane, in which the depth filtration layer comprises a nanoweb layer and a prefiltration layer upstream of and in fluid communication with the nanoweb layer and in which the prefiltration layer comprises a charged nonwoven.

2. The media of claim 1 in which the nanoweb has a basis weight of at least about 2 g/m².

3. The media of claim 1 or 2 in which the charged nonwoven is a melt blown web.

4. The media of claim 3 in which the charged melt blown web has a basis weight of at least about 30 g/m².

5. A filter comprising the filter media of claim 1, 2, 3 or 4.

## Patentansprüche

1. Filtermedium zum Filtrieren von teilchenförmigen Substanzen aus Luft oder Gasen, umfassend eine Membran und eine Tiefenfiltrierschicht stromaufwärts und in Fluidkontakt mit der Membran, wobei die Tiefenfiltrierschicht eine Nanobahnschicht und eine Vorfiltrierschicht stromaufwärts von und in Fluidkommunikation mit der Nanobahnschicht umfasst, und wobei die Vorfiltrierschicht einen geladenen Vliesstoff umfasst.

2. Medium nach Anspruch 1, wobei die Faserbahn ein Flächengewicht von mindestens 2 g/m² aufweist.

3. Medium nach Anspruch 1 oder 2, wobei der geladene Vliesstoff eine schmelzgeblasene Bahn ist.

4. Medium nach Anspruch 3, wobei die geladene schmelzgeblasene Bahn ein Flächengewicht von mindestens etwa 30 g/m² aufweist.

5. Filter, umfassend das Filtermedium nach Anspruch 1, 2, 3 oder 4.

## Revendications

1. Support filtrant pour la filtration de particules à partir d'air ou d'autres gaz comprenant une membrane, et une couche de filtration en profondeur en amont et en contact de fluide avec la membrane, dans lequel la couche de filtration en profondeur comprend une couche de toile nanométrique et une couche de pré-filtration en amont de et en communication de fluide avec la couche de toile nanométrique et dans lequel la couche de pré-filtration comprend un non-tissé chargé.

2. Support selon la revendication 1, dans lequel la toile nanométrique possède une masse surfacique d'au moins environ 2 g/m².

3. Support selon la revendication 1 ou 2, dans lequel le non-tissé chargé est une toile de fusion-soufflage.

4. Support selon la revendication 3, dans lequel la toile de fusion-soufflage chargée possède une masse surfacique d'au moins environ 30 g/m².

5. Filtre comprenant le support filtrant selon la revendication 1, 2, 3 ou 4.
